Europäisches Patentamt

**European Patent Office**

Office européen des brevets

(11) Numéro de publication : **0 143 008**
**B1**

# (12) FASCICULE DE BREVET EUROPÉEN

(45) Date de publication du fascicule du brevet :
21.01.87

(21) Numéro de dépôt : **84401633.7**

(22) Date de dépôt : **06.08.84**

(51) Int. Cl.⁴ : **H 01 B 15/00**

(54) **Procédé et installation de dénudage cryogénique de câbles électriques ou analogues.**

(30) Priorité : 26.08.83 FR 8313748

(43) Date de publication de la demande :
29.05.85 Bulletin 85/22

(45) Mention de la délivrance du brevet :
21.01.87 Bulletin 87/04

(84) Etats contractants désignés :
**AT BE CH DE FR GB IT LI LU NL SE**

(56) Documents cités :
**FR-A- 2 050 752**
**GB-A- 1 300 934**

(73) Titulaire : **L'AIR LIQUIDE, SOCIETE ANONYME POUR
L'ETUDE ET L'EXPLOITATION DES PROCEDES
GEORGES CLAUDE
75, Quai d'Orsay
F-75321 Paris Cedex 07 (FR)**

(72) Inventeur : **Le Diouron, Raymond
Rue du Plantier
F-38500 Voiron (FR)**

(74) Mandataire : **Jacobson, Claude et al
L'AIR LIQUIDE, SOCIETE ANONYME POUR L'ETUDE
ET L'EXPLOITATION DES PROCEDES GEORGES
CLAUDE 75, quai d'Orsay
F-75321 Paris Cedex 07 (FR)**

Jouve, 18, rue St-Denis, 75001 Paris, France

## Description

La présente invention est relative au dénudage cryogénique des câbles électriques ou analogues. Elle concerne en premier lieu un procédé de dénudage cryógénique d'un câble électrique ou analogue comprenant au moins une gaine fragile à basse température et une âme métallique déformable à la même température, procédé du type dans lequel le câble est refroidi par un agent cryogénique dans une enceinte, soumis à des sollicitations mécaniques à la sortie de cette enceinte et enroulé sur une bobine réceptrice.

Il existe de nombreuses techniques pour traiter les câbles électriques usagés ou les déchets de fabrication de tels câbles (déchets qui correspondent notamment à la phase de démarrage de l'extrusion de la gaine isolante sur l'âme métallique et à la coupe du câble à la longueur désirée) de façon à en séparer les constituants en vue de leur récupération.

Parmi ces techniques, les plus avantageuses sont celles qui ne nécessitent pas de découpe préalable du câble pour l'alimentation d'une machine telle qu'un broyeur, c'est-à-dire qui permettent de traiter de grandes longueurs de câble.

Dans ce contexte, il a été proposé de procéder par brûlage de la gaine. Ce mode opératoire, outre qu'il exclut la possibilité de récupérer la matière plastique ou caoutchouteuse constituant la gaine isolante, présente l'inconvénient d'altérer, par les contraintes thermiques et les changements cristallographiques qu'il entraîne, l'âme métallique du câble. De plus, il ne convient pas pour le traitement des câbles ayant une gaine extérieure de protection en acier.

Une autre solution consiste à inciser longitudinalement la gaine isolante à la température ambiante. Cette solution n'est satisfaisante que dans certains cas, pour des câbles de petit diamètre dépourvus de gaine extérieure de protection en acier.

Pour éviter ces inconvénients, on a également proposé des procédés du type indiqué plus haut, basés sur la différence de comportement à basse température entre la ou les gaines extérieures, qui se fragilisent, et l'âme métallique, en cuivre ou en aluminium, qui reste déformable. Ainsi, dans le document FR-A-2 050 752 ou GB-A-1 300 934, le câble, porté par un tambour extérieur à l'enceinte, défile à travers un bain d'azote liquide contenu dans cette dernière avant de passer dans les moyens de sollicitation mécanique.

Cependant, ce procédé ne s'est pas révélé entièrement satisfaisant. En particulier, il ne convient pas pour le traitement des câbles de gros diamètre (de l'ordre de 30 mm par exemple), car le temps de refroidissement de ces câbles, qui croît comme le carré du diamètre, conduirait à des vitesses de défilement beaucoup trop faibles.

L'invention a pour but de fournir un procédé et une installation permettant de traiter les câbles électriques de tout diamètre, éventuellement pourvus d'une gaine extérieure en acier.

A cet effet, l'invention a pour objet un procédé de dénudage cryogénique du type précité, caractérisé en ce qu'on refroidit tout d'abord dans l'enceinte l'ensemble du câble à dénuder, puis on commence à extraire le câble de l'enceinte lorsque la gaine de l'ensemble du câble a atteint sa température de fragilisation.

De préférence, on enroule tout d'abord le câble sur un tambour, lequel est monté à rotation dans l'enceinte.

L'invention a également pour objet une installation destinée à la mise en œuvre d'un tel procédé. Cette installation, du type comprenant un tambour destiné à recevoir le câble à dénuder, une enceinte de refroidissement alimentée en agent cryogénique, des moyens de sollicitation mécanique du câble disposés à la sortie de cette enceinte, et une bobine réceptrice pour le câble dénudé, est caractérisée en ce qu'elle comprend des moyens pour porter à rotation le tambour à l'intérieur de l'enceinte.

Dans un mode de mise en œuvre préféré du procédé suivant l'invention, on crée dans l'enceinte une circulation forcée de gaz et on y injecte l'agent cryogénique sous la commande d'une sonde de température. Ceci permet d'utiliser la chaleur sensible de l'agent cryogénique vaporisé en plus de sa chaleur de vaporisation et de travailler juste à la température désirée, ce qui rend le procédé particulièrement économique.

Dans ce cas, pour assurer un refroidissement efficace du câble, il est avantageux que le tambour comporte un noyau perforé et que les moyens de mise en circulation forcée comprennent un ventilateur disposé coaxialement à ce noyau, à une extrémité de celui-ci.

Un exemple de mise en œuvre de l'invention va maintenant être décrit en regard des dessins annexés, sur lesquels :

la figure 1 est une vue schématique de côté, partiellement en coupe longitudinale, d'une installation de dénudage cryogénique conforme à l'invention ; et

la figure 2 est une vue en plan, avec coupe partielle, d'une partie de cette installation.

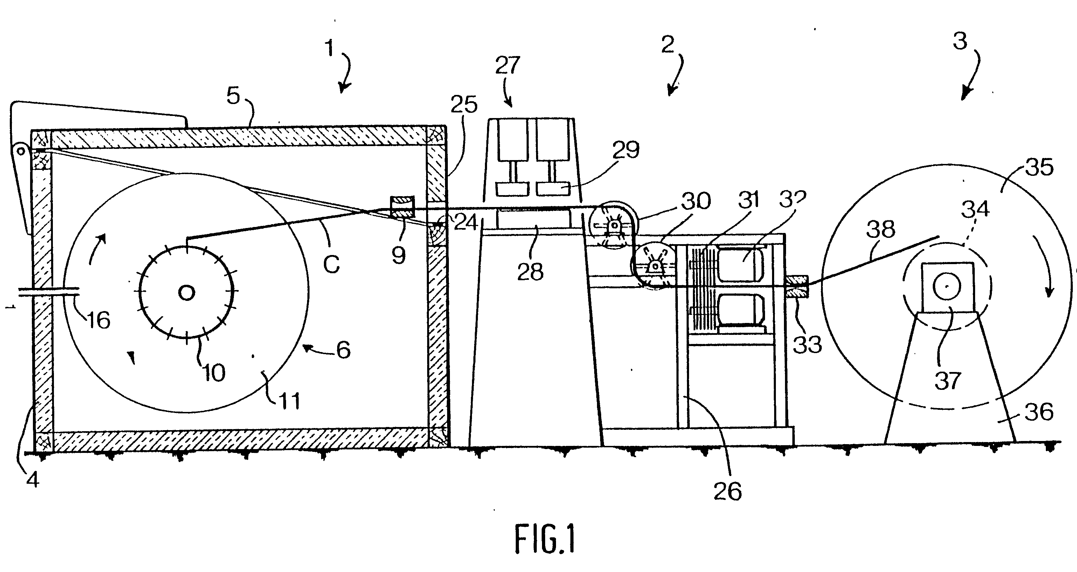

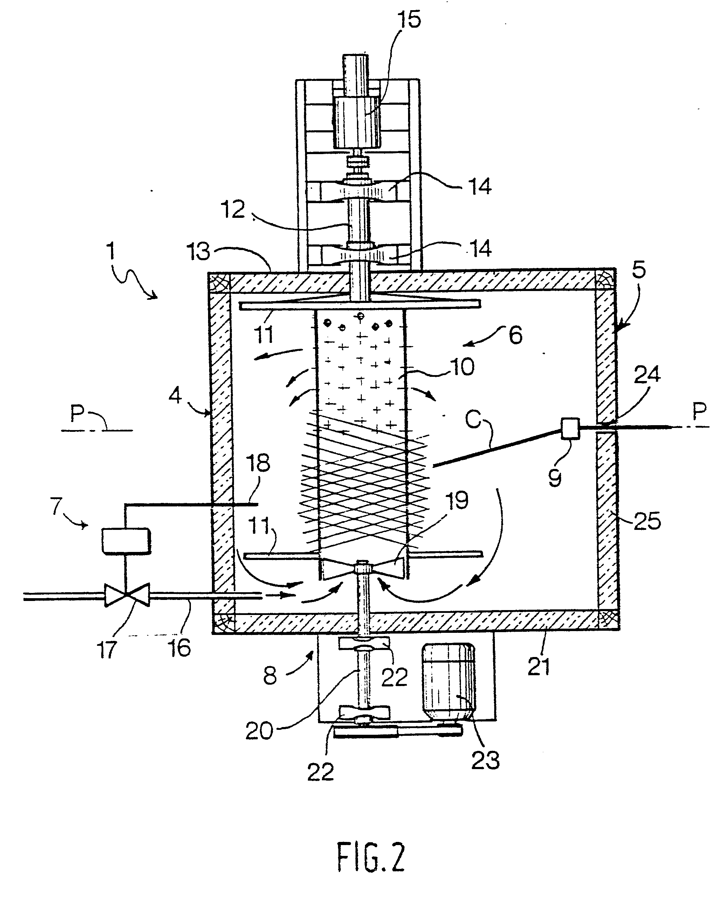

L'installation représentée aux figures 1 et 2 est destinée à dénuder une longueur relativement importante d'un câble électrique C constitué essentiellement d'une âme en cuivre ou en aluminium, d'une gaine isolante en matière plastique ou caoutchouteuse et éventuellement d'une gaine extérieure de protection en acier.

Cette installation comprend essentiellement une enceinte 1 isolée thermiquement, des moyens 2 de sollicitation mécanique et une bobine réceptrice 3.

L'enceinte 1 comprend un corps 4 sur lequel est articulé un couvercle 5, un tambour 6 monté à demeure dans l'enceinte, un dispositif 7 d'injection d'azote liquide, un ventilateur 8 et un guide-câble 9.

Le tambour 6 est constitué d'un noyau cylindrique 10 creux et perforé portant un flasque 11 à chaque extrémité. L'un des flasques 11 obture l'extrémité correspondante du noyau 10 et est fixé à l'extrémité d'un arbre 12 qui traverse à joint étanche une paroi latérale 13 du corps 4 de l'enceinte 1 et est porté par deux paliers 14 situés à l'extérieur et du même côté de cette enceinte. Au-delà de ces deux paliers, l'arbre 12 est accouplé par son autre extrémité à l'arbre de sortie d'un moto-variateur 15. Ainsi, le tambour 6 est monté en porte à faux dans l'enceinte 1. L'autre flasque 11 est annulaire et laisse ouverte l'extrémité correspondante du noyau 10.

Le dispositif d'injection 7 comprend une conduite 16 reliée à une source d'azote liquide (non représentée) et débouchant dans l'enceinte 1. Cette conduite est équipée d'une électrovanne 17 commandée par une sonde de température 18 qui mesure la température régnant dans l'enceinte 1. En variante, la conduite 16 pourrait être reliée à une source d'anhydride carbonique.

Le ventilateur 8 comprend une hélice 19 disposée coaxialement au tambour 6, dans l'extrémité ouverte du noyau 10. L'arbre 20 de cette hélice traverse à joint étanche la paroi latérale 21 en regard du corps 4 de l'enceinte 1, est porté à l'extérieur de celle-ci par deux paliers 22 et est entraîné par un moteur 23.

Le guide-câble 9 est situé en regard d'une petite fenêtre 24 prévue dans la paroi avant 25 du couvercle 5 de l'enceinte, dans le plan vertical de symétrie P du tambour 6.

Les moyens 2 de sollicitation mécanique (non représentés sur la figure 2) sont portés, à peu près dans le plan P, par un bâti commun 26 disposé à l'extérieur de l'enceinte 1, près de la paroi 25. Ces moyens comprennent, d'amont en aval :

un dispositif de percussion 27 constitué d'une enclume 28 surmontée de deux marteaux 29 alignés dans le plan P ;

deux galets fous de flexion 30, dont les axes sont décalés à la fois longitudinalement et verticalement ; et

deux brosses rotatives 31 entraînées par des moteurs respectifs 32 et dont les axes sont parallèles entre eux et parallèles au plan P.

A son extrémité aval, le bâti 26 est muni d'un guide-câble 33 situé dans le plan P.

La bobine réceptrice 3 est démontable, c'est-à-dire qu'elle est constituée de deux demi-noyaux 34 séparables portant chacun un flasque 35. Elle est montée de façon amovible sur un support 36 équipé d'un moteur 37 d'entraînement en rotation.

En fonctionnement, le câble C est tout d'abord enroulé sur le tambour 6 en faisant tourner celui-ci à la vitesse désirée au moyen du moto-variateur 15. L'enroulement s'effectue d'une part à spires non jointives, pour chaque nappe, et d'autre part à nappes croisées, c'est-à-dire que chaque nappe a un pas d'enroulement de sens opposé à la ou aux deux nappes adjacentes. On obtient ainsi sur le noyau 10 du tambour 6 une structure très perméable aux gaz. L'extrémité libre du câble est enfilée à travers le guide-câble 9, la fenêtre 24, les moyens de sollicitation 2 et le guide-câble 33 et accrochée au noyau 34 de la bobine réceptrice 3, et le tambour 6 est immobilisé.

Lorsque ces opérations sont terminées, on met l'enceinte 1 en froid. Pour cela, on crée une circulation forcée dans cette enceinte au moyen du ventilateur 19, et on injecte de l'azote liquide par la conduite 16 jusqu'à obtenir puis maintenir une température suffisamment basse pour fragiliser la gaine isolante, et éventuellement la gaine extérieure en acier, du câble C, alors que l'âme 38 en cuivre ou en aluminium de ce câble reste déformable à cette température. Comme illustré à la figure 2, le gaz mis en circulation par le ventilateur 19 pénètre axialement dans le noyau 10 du tambour 6 par une extrémité et en ressort radialement à travers les perforations de ce noyau et à travers les nappes de câble enroulées sur lui, ce qui assure un refroidissement efficace et homogène de l'ensemble du câble.

Au bout d'un certain temps, facilement déterminable pour chaque type de câble, la ou les gaines sont fragilisées. On remarque que ce temps est pratiquement indépendant de la longueur de câble traité grâce à la méthode d'enroulement et de mise en circulation des gaz décrite ci-dessus. On entraîne alors la bobine réceptrice 3 en rotation au moyen du moteur 37, et on met en marche le dispositif de percussion 27 ainsi que les brosses 31.

Ainsi, le câble C sort progressivement de l'enceinte 1 par la fenêtre 24 ; les marteaux 29 cassent la ou les gaines, les galets 30 détachent les morceaux ainsi cassés, et les brosses 31 assurent un nettoyage final de l'âme 38 du câble. C'est donc cette âme dénudée qui s'enroule sur le noyau 34 de la bobine réceptrice 3. Des bacs collecteurs non représentés peuvent être prévus sur le bâti 26 pour recueillir les fragments séparés par les moyens 2.

Lorsque tout le câble est dénudé, on démonte la bobine 3, ce qui fournit le câble dénudé sous la forme d'un rouleau compact pouvant être directement envoyé à un four de deuxième fusion en vue de la réutilisation du cuivre ou de l'aluminium.

En variante, le tambour 6 peut être prévu amovible, ce qui permet d'effectuer l'opération d'enroulement du câble sur ce tambour à l'emplacement le plus approprié. Dans ce cas, le moto-variateur 15 associé à l'enceinte 1 peut être supprimé. On peut par exemple utiliser un bâti mobile porte-tambour équipé d'un moto-variateur, et munir l'enceinte 1 d'une porte permettant de mettre en place cet équipage dans la position représentée à la figure 2.

## Revendications

1. Procédé de dénudage cryogénique d'un câble électrique ou analogue comprenant au moins une gaine fragile à basse température et une âme métallique déformable à la même température, procédé du type dans lequel le câble (C) est refroidi par un agent cryogénique dans une enceinte (1), soumis à des sollicitations mécaniques à la sortie de cette enceinte et enroulé sur une bobine réceptrice (3), caractérisé en ce qu'on refroidit tout d'abord dans l'enceinte (1) l'ensemble du câble à dénuder, puis on commence à extraire le câble de l'enceinte lorsque la gaine de l'ensemble du câble a atteint sa température de fragilisation.

2. Procédé suivant la revendication 1, caractérisé en ce qu'on enroule tout d'abord le câble (C) sur un tambour (6), lequel est monté à rotation dans l'enceinte (1).

3. Procédé suivant l'une des revendications 1 et 2, caractérisé en ce qu'on crée dans l'enceinte (1) une circulation forcée de gaz et on y injecte l'agent cryogénique sous la commande d'une sonde de température (18).

4. Procédé suivant les revendications 2 et 3 prises ensemble, caractérisé en ce qu'on fait circuler le gaz axialement à travers le noyau (10) du tambour (6) et radialement à travers la ou les nappes de câble enroulées sur celui-ci.

5. Procédé suivant les revendications 2 et 3 prises ensemble ou suivant l'une des revendications 2 et 4, caractérisé en ce qu'on enroule le câble (C) sur le noyau (10) du tambour (6) à spires non jointives, les nappes successives ayant des pas de sens alternés.

6. Procédé suivant l'une quelconque des revendications 1 à 5, caractérisé en ce qu'on utilise comme agent cryogénique de l'azote liquide ou de l'anhydride carbonique.

7. Installation de dénudage cryogénique de câbles électriques ou analogues, du type comprenant un tambour (6) destiné à recevoir le câble (C) à dénuder, une enceinte de refroidissement (1) alimentée en agent cryogénique, des moyens (2) de sollicitation mécanique du câble disposés à la sortie de cette enceinte, et une bobine réceptrice (3) pour le câble dénudé, caractérisée en ce qu'elle comprend des moyens pour porter à rotation le tambour (6) à l'intérieur de l'enceinte (1).

8. Installation suivant la revendication 7, caractérisée en ce que l'enceinte (1) comporte des moyens (8) de mise en circulation forcée des gaz qu'elle contient et des moyens (7) d'injection de l'agent cryogénique dans l'enceinte commandés par une sonde de température (18).

9. Installation suivant la revendication 8, caractérisée en ce que le tambour (6) comporte un noyau perforé (10), et en ce que lesdits moyens (8) de mise en circulation forcée comprennent un ventilateur (19) disposé coaxialement à ce noyau, à une extrémité de celui-ci.

10. Installation suivant l'une quelconque des revendications 7 à 9, caractérisée en ce que le tambour (6) est monté à demeure dans l'enceinte (1).

11. Installation suivant l'une quelconque des revendications 7 à 10, caractérisée en ce que la bobine réceptrice (3) est démontable.

12. Installation suivant l'une quelconque des revendications 7 à 11, caractérisée en ce que lesdits moyens de sollicitation (2) comprennent des galets de flexion (30) suivis de brosses (31), ces organes étant éventuellement précédés d'un dispositif de percussion (27).

## Claims

1. Method for cryogenically stripping electrical cables or the like comprising at least one sheath fragile at low temperature and a metallic core deformable at the same temperature, the said method being of the type in which the cable (C) is cooled by a cryogenic agent in a case (1), submitted to mechanical stresses at the exit of the said case and wound up on a take-up reel (3), characterized in that one first cools in the case (1) the whole of the cable to be stripped, then one starts to extract the cable from the case when the sheath of the whole cable has reached its temperature of embrittlement.

2. Method according to claim 1, characterized in that one first winds up the cable (C) on a drum (6), which drum is mounted for rotation in the case (1).

3. Method according to one of the claims 1 and 2, characterized in that one creates a forced circulation of gas in the case (1) and one injects cryogenic agent into that case under the control of a temperature probe (18).

4. Method according to the claims 2 and 3 taken together, characterized in that one makes the gas circulate axially across the core (10) of the drum (6) and radially through the layer or layers of the cable wound up on the same.

5. Method according to claims 2 and 3 taken together, or according to one of the claims 2 and 4, characterized in that one winds up the cable (C) on the core (10) of the drum (6) with turns spaced from one another, the successive layers having pitches of alternating senses.

6. Method according to anyone of the claims 1 to 5, characterized in that one utilizes as cryogenic agent liquid nitrogen or carbon dioxide.

7. Installation for cryogenically stripping electrical cables or the like, of the type comprising a drum (6) intended to receive the cable (C) to be stripped, a cooling case (1) supplied with cryogenic agent, means (2) to stress the cable mechanically, which means are disposed at the exit of the said case, and a take-up reel (3) for the stripped cable, characterized in that it comprises means to rotatably support the drum (6) within the interior of the case (1).

8. Installation according to claim 7, characterized in that the case (1) comprises means (8) to bring the gases contained therein in forced circulation, and means (7) for injecting the cryogenic agent into the case, controlled by a temperature probe (18).

9. Installation according to claim 8, characterized in that the drum (6) comprises a perforated core (10) and that the said means (8) for creating a forced circulation comprise a fan (19) disposed coaxially to the said core, at one end of the same.

10. Installation according to anyone of the claims 7 to 9, characterized in that the drum (6) is mounted permanently within the case (1).

11. Installation according to anyone of the claims 7 to 10, characterized in that the take-up reel (3) is dismountable.

12. Installation according to anyone of the claims 7 to 11, characterized in that the said stressing means (2) comprise flexing rollers (30) followed by brushes (31), a percussion device (27) eventually preceding the parts.

## Patentansprüche

1. Verfahren zum Tiefsttemperaturabisolieren eines elektrischen Kabels oder dergleichen mit mindestens einer bei tiefer Temperatur zerbrechlichen Hülle und einer bei der selben Temperatur verformbaren, metallischen Seele, bei welchem das Kabel (C) durch ein Tiefsttemperaturmittel in einem Raum (1) gekühlt wird, am Ausgang dieses Raumes mechanischen Beanspruchungen unterworfen wird und auf eine Aufwickelrolle (3) aufgewickelt wird, dadurch gekennzeichnet, daß man ganz zu Anfang in dem Raum (1) das gesamte abzuisolierende Kabel kühlt und daß man dann das Kabel aus dem Raum abzuziehen beginnt, wenn die Hülle des gesamten Kabels ihre Versprödungstemperatur erreicht hat.

2. Verfahren nach Anspruch 1, dadurch gekennzeichnet, daß man ganz zu Anfang das Kabel (C) auf eine Trommel (6) aufrollt, die in dem Raum (1) drehbar angebracht ist.

3. Verfahren nach einem der Ansprüche 1 und 2, dadurch gekennzeichnet, daß man in dem Raum (1) einen Gaszwangsumlauf erzeugt und das Tiefsttemperaturmittel unter der Steuerung eines Temperaturmeßfühlers (18) dort einspritzt.

4. Verfahren nach den Ansprüchen 2 und 3 zusammen, dadurch gekennzeichnet, daß man das Gas axial durch den Kern (10) der Trommel (6) zirkulieren und radial durch die Schicht oder Schichten des auf diesem aufgewickelten Kabels zirkulieren läßt.

5. Verfahren nach den Ansprüchen 2 und 3 zusammen oder nach einem der Ansprüche 2 und 4, dadurch gekennzeichnet, daß man das Kabel (C) auf den Kern (10) der Trommel (6) in nicht nebeneinanderliegenden Windungen aufwickelt, wobei aufeinanderfolgende Schichten Schritte mit alternierendem Sinn haben.

6. Verfahren nach einem der Ansprüche 1 bis 5, dadurch gekennzeichnet, daß man als Tiefsttemperaturmittel flüssigen Stickstoff oder Kohlensäureanhydrid verwendet.

7. Anlage zum Tiefsttemperaturabisolieren von elektrischen Kabeln oder dergleichen, mit einer Trommel (6) zur Aufnahme des abzuisolierenden Kabels (C), einem Abkühlraum (1), der mit Tiefsttemperaturmittel versorgt wird, mechanischen Beanspruchungsmitteln (2) für das Kabel, die am Ausgang dieses Raumes angeordnet sind, und einer Aufwickelrolle (3) für das abisolierte Kabel, dadurch gekennzeichnet, daß sie Mittel aufweist, um die Trommel (6) im Inneren des Raumes (1) drehbar anzubringen.

8. Anlage nach Anspruch 7, dadurch gekennzeichnet, daß der Raum (1) Mittel (8) aufweist für einen Zwangsumlauf von Gasen, die er enthält, und Einspritzmittel (7) für Tiefsttemperaturmittel in dem Raum, welche durch einen Temperaturmeßfühler (18) gesteuert sind.

9. Anlage nach Anspruch 8, dadurch gekennzeichnet, daß die Trommel (6) einen perforierten Kern (10) aufweist, daß die Mittel (8) für den Zwangsumlauf einen Ventilator (19) aufweisen, der zu dem Kern koaxial an einem Ende desselben angeordnet ist.

10. Anlage nach einem der Ansprüche 7 bis 9, dadurch gekennzeichnet, daß die Trommel (6) auf Dauer in dem Raum (1) angebracht ist.

11. Anlage nach einem der Ansprüche 7 bis 10, dadurch gekennzeichnet, daß die Aufwickelrolle (3) abnehmbar ist.

12. Anlage nach einem der Ansprüche 7 bis 11, dadurch gekennzeichnet, daß die Beanspruchungsmittel (2) Biegerollen aufweisen, die von Bürsten (31) gefolgt sind, wobei diesen Organen eventuell eine Schlagvorrichtung (27) vorgeschaltet ist.

FIG.1

FIG.2